# EUROPEAN PATENT APPLICATION

(11) **EP 4 848 659 A1**
(43) Date of publication of application: **02.12.2026**
(21) Application number: 25805934.4
(22) Date of filing: 26.03.2025
(51) Int. Cl.: H04L 9/40, H04L 41/12

(54) **PARAMETER CONFIGURATION METHOD AND APPARATUS, AND DEVICE**

(71) Applicant: New H3C Technologies Co., Ltd., Binjiang District Hangzhou Zhejiang 310052 (CN)
(72) Inventor: WU, Tingqiao, Beijing 100102 (CN)
(74) Representative: Bandpay & Greuter
(86) International application number: PCT/CN2025/085141
(87) International publication number: WO 2026/199258

(57) **Abstract**

The present disclosure provides a parameter configuration method, apparatus, and apparatus. The method includes: receiving a first parameter request packet sent by a first MACsec slave apparatus, where the first parameter request packet includes an interface identifier of a first interface of the first MACsec slave apparatus and the MAC address of the first interface; receiving a second parameter request packet sent by a second MACsec slave apparatus, where the second parameter request packet includes an interface identifier of a second interface of the second MACsec slave apparatus and the MAC address of the second interface; in response to determining that the pairing between the first interface and the second interface is successful based on the first parameter request packet and the second parameter request packet, obtaining first MACsec parameters corresponding to the first MACsec slave apparatus and second MACsec parameters corresponding to the second MACsec slave apparatus; sending the first MACsec parameters to the first MACsec slave apparatus and sending the second MACsec parameters to the second MACsec slave apparatus, enabling the first MACsec slave apparatus and the second MACsec slave apparatus to perform MACsec communication based on the first MACsec parameters and the second MACsec parameters. Through the technical solution of the present disclosure, automatic deployment of MACsec parameters is achieved.

## Description

### TECHNICAL FIELD

The present disclosure relates to the field of communication technologies, and particularly relates to a method for parameter configuration and an apparatus.

### BACKGROUND

Encryption technologies (such as IPsec, etc.) require the use of an encryption single board to implement encryption functions, which have relatively weak processing performance, and may not protect all data following the Layer 2 frame header and may only protect data following the Layer 3 header. Therefore, a MACsec (Media Access Control Security) encryption technology is proposed.

MACsec defines a method for secure data communication over local area networks. MACsec may provide users with secure MAC-layer data transmission and reception services, including user data encryption, data frame integrity verification, and data source authenticity verification. MACsec is used in conjunction with 802.1X authentication, which employs keys generated through negotiation using the MACsec Key Agreement (MKA) protocol to encrypt and verify the integrity of authenticated user data, preventing interfaces from processing packets from unauthorized apparatuses or tampered packets.

However, to implement MACsec, parameters need to be configured on each apparatus for every pair of adjacent interfaces. These parameters are to perform negotiation and encryption, making the deployment and operation and maintenance of MACsec relatively complex.

### SUMMARY

The present disclosure provides a parameter configuration method applied to a MACsec master apparatus, including:
receiving a first parameter request packet sent by a first MACsec slave apparatus, wherein the first parameter request packet comprises an interface identifier of a first interface of the first MACsec slave apparatus and a Media Access Control (MAC) address of the first interface, an interface identifier of a neighbor interface of a neighbor apparatus of the first MACsec slave apparatus and a MAC address of the neighbor interface of the neighbor apparatus of the first MACsec slave apparatus;
receiving a second parameter request packet sent by a second MACsec slave apparatus, wherein the second parameter request packet comprises an interface identifier of a second interface of the second MACsec slave apparatus and a MAC address of the second interface, an interface identifier of a neighbor interface of a neighbor apparatus of the second MACsec slave apparatus and a MAC address of the neighbor interface of the neighbor apparatus of the second MACsec slave apparatus;
in response to determining that the first interface and the second interface are successfully paired based on the first parameter request packet and the second parameter request packet, obtaining a first MACsec parameter corresponding to the first MACsec slave apparatus and a second MACsec parameter corresponding to the second MACsec slave apparatus;
sending the first MACsec parameter to the first MACsec slave apparatus, sending the second MACsec parameter to the second MACsec slave apparatus, and enabling the first MACsec slave apparatus and the second MACsec slave apparatus to perform MACsec communication based on the first MACsec parameter and the second MACsec parameter.

The present disclosure provides a parameter configuration method applied to any MACsec slave apparatus, including:
obtaining an interface identifier of a neighbor interface of a neighbor apparatus of the MACsec slave apparatus and a MAC address of the neighbor interface;
sending a parameter request packet to a MACsec master apparatus, wherein the parameter request packet comprises an interface identifier of a local interface of the MACsec slave apparatus and a MAC address of the local interface, the interface identifier of the neighbor interface of the neighbor apparatus and the MAC address of the neighbor interface; wherein the local interface is connected to the neighbor interface;
receiving a MACsec parameter corresponding to the MACsec slave apparatus sent by the MACsec master apparatus; wherein the MACsec parameter is obtained by the MACsec master apparatus in response to determining that the local interface and the neighbor interface are successfully paired based on the parameter request packet;
performing MACsec communication with the neighbor apparatus based on the MACsec parameter.

The present disclosure provides a parameter configuration apparatus applied to a MACsec master apparatus, including:
a receiving module, to receive a first parameter request packet sent by a first MACsec slave apparatus, wherein the first parameter request packet comprises an interface identifier of a first interface of the first MACsec slave apparatus and a Media Access Control (MAC) address of the first interface, an interface identifier of a neighbor interface of a neighbor apparatus of the first MACsec slave apparatus and a MAC address of the neighbor interface of a neighbor apparatus of the first MACsec slave apparatus; receive a second parameter request packet sent by a second MACsec slave apparatus, wherein the second parameter request packet comprises an interface identifier of a second interface of the second MACsec slave apparatus and a MAC address of the second interface, an interface identifier of a neighbor interface of a neighbor apparatus of the second MACsec slave apparatus and a MAC address of the neighbor interface of the neighbor apparatus of the second MACsec slave apparatus;
an obtaining module, to, in response to determining that the first interface and the second interface are successfully paired based on the first parameter request packet and the second parameter request packet that, obtain a first MACsec parameter corresponding to the first MACsec slave apparatus and a second MACsec parameter corresponding to the second MACsec slave apparatus;
a sending module, to send the first MACsec parameter to the first MACsec slave apparatus and send the second MACsec parameter to the second MACsec slave apparatus, and enable the first MACsec slave apparatus and the second MACsec slave apparatus to perform MACsec communication based on the first MACsec parameter and the second MACsec parameter.

The present disclosure provides a parameter configuration apparatus applied to any MACsec slave apparatus, the parameter configuration apparatus including:
an obtaining module, to obtain an interface identifier of a neighbor interface of a neighbor apparatus of the MACsec slave apparatus and a MAC address of the neighbor interface; wherein the neighbor apparatus is another MACsec slave apparatus;
a sending module, to send a parameter request packet to a MACsec master apparatus, wherein the parameter request packet comprises an interface identifier of a local interface of the MACsec slave apparatus and a MAC address of the local interface, the interface identifier of the neighbor interface of the neighbor apparatus and the MAC address of the neighbor interface; wherein the local interface is connected to the neighbor interface;
a receiving module, configured to receive a MACsec parameter corresponding to the MACsec slave apparatus sent by the MACsec master apparatus; wherein the MACsec parameter is obtained by the MACsec master apparatus in response to determining that the local interface and the neighbor interface are successfully paired based on the parameter request packet;
a communication module, to perform MACsec communication with the neighbor apparatus based on the MACsec parameter.

The present disclosure provides an electronic apparatus, including: a processor and a machine-readable storage medium, wherein the machine-readable storage medium stores machine-executable instructions that may be executed by the processor; the processor is configured to execute the machine-executable instructions to implement the parameter configuration method described in the above examples of the present disclosure.

The present disclosure provides a computer program product, wherein the computer program product includes a computer program, and in response to determining the computer program is executed by a processor, which implements the parameter configuration method described in the above examples of the present disclosure.

The present disclosure provides a machine-readable storage medium, wherein the machine-readable storage medium stores machine-executable instructions that may be executed by a processor; wherein the processor is to execute the machine-executable instructions, and in response to determining the machine-executable instructions are executed, they implement the parameter configuration method described in the above examples of the present disclosure.

It may be seen from the above technical solutions that in the examples of the present disclosure, the adjacency relationships of MACsec slave apparatuses are reported to the MACsec master apparatus, and the MACsec master apparatus obtains MACsec parameters of the MACsec slave apparatuses, thereby centralizing the MACsec parameters to the MACsec master apparatus for processing. The MACsec master apparatus centrally manages the MACsec parameters and sends them down to the MACsec slave apparatuses to complete the configuration of the MACsec parameters, simplifying the MACsec parameter configuration work, achieving automatic deployment of the MACsec parameters, making the deployment and operation and maintenance of MACsec relatively simple, and solving the problem of complex MACsec deployment.

### BRIEF DESCRIPTION OF THE DRAWINGS

FIG. 1A is a schematic diagram of a parameter configuration method in an example of the present disclosure.
FIG. 1B is a schematic diagram of a parameter configuration method in an example of the present disclosure.
FIG. 2 is a networking schematic diagram of a MACsec network in an example of the present disclosure.
FIG. 3 is a schematic diagram of a parameter configuration method in an example of the present disclosure.
FIG. 4A is a schematic diagram of a MACsec NLRI field in an example of the present disclosure.
FIG. 4B is a schematic diagram of a variable-length NLRI field in an example of the present disclosure.
FIG. 4C is a schematic diagram of a MACsec attribute field in an example of the present disclosure.
FIG. 4D is a schematic diagram of a MACsec attribute field in an example of the present disclosure.
FIG. 4E is a schematic diagram of a MACsec option field in an example of the present disclosure.
FIG. 5A is a schematic diagram of a MACsec attribute field in an example of the present disclosure.
FIG. 5B is a schematic diagram of a MACsec option field in an example of the present disclosure.
FIG. 6A is a structural schematic diagram of a parameter configuration apparatus in an example of the present disclosure.
FIG. 6B is a structural schematic diagram of a parameter configuration apparatus in an example of the present disclosure.
FIG. 7 is a hardware structure schematic diagram of an electronic apparatus in an example of the present disclosure.

### DETAILED DESCRIPTION

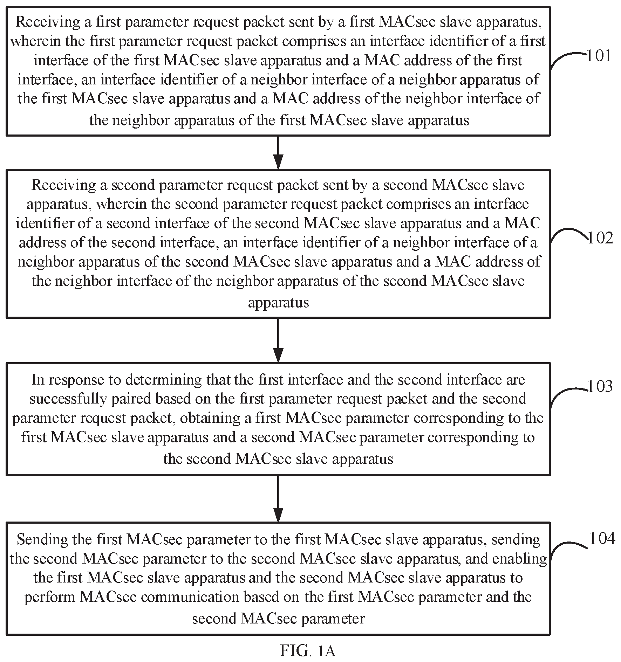

In the examples of the present disclosure, a parameter configuration method is proposed, which may be applied to a MACsec master apparatus. As shown in FIG. 1A, which is a flow schematic diagram of the method, the method may include the following processes:
Process 101: Receive a first parameter request packet sent by a first MACsec slave apparatus, where the first parameter request packet includes an interface identifier of a first interface of the first MACsec slave apparatus, a MAC address of the first interface, an interface identifier of a neighbor interface of a neighbor apparatus of the first MACsec slave apparatus, and a MAC address of the neighbor interface of the neighbor apparatus of the first MACsec slave apparatus.
Process 102: Receive a second parameter request packet sent by a second MACsec slave apparatus, where the second parameter request packet includes an interface identifier of a second interface of the second MACsec slave apparatus, a MAC address of the second interface, an interface identifier of a neighbor interface of a neighbor apparatus of the second MACsec slave apparatus, and a MAC address of the neighbor interface of the neighbor apparatus of the second MACsec slave apparatus.
Process 103: In response to determining it is determined based on the first parameter request packet and the second parameter request packet that the first interface and the second interface are successfully paired, obtain first MACsec parameters corresponding to the first MACsec slave apparatus and second MACsec parameters corresponding to the second MACsec slave apparatus.
Process 104: Send the first MACsec parameters to the first MACsec slave apparatus and send the second MACsec parameters to the second MACsec slave apparatus, and enable the first MACsec slave apparatus and the second MACsec slave apparatus to perform MACsec communication based on the first MACsec parameters and the second MACsec parameters.

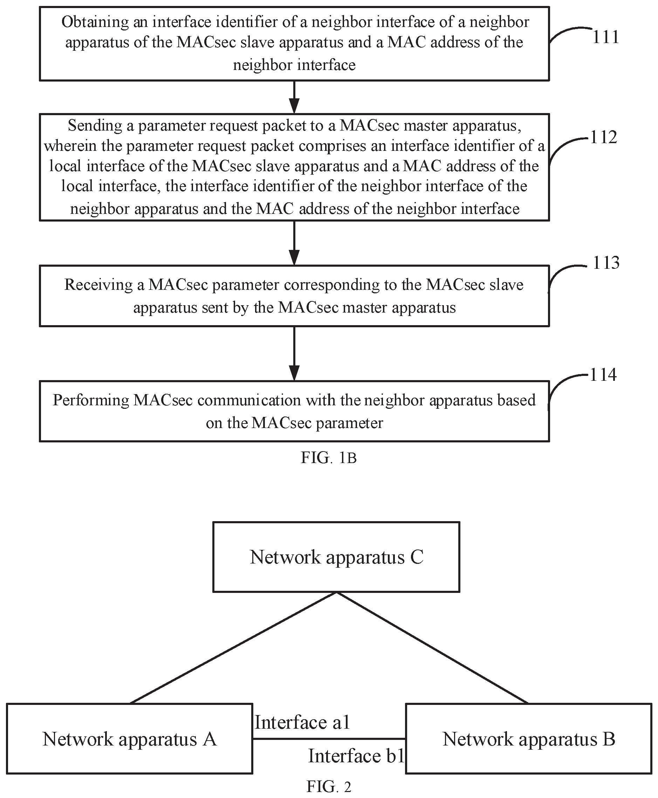

In the examples of the present disclosure, a parameter configuration method is proposed, which may be applied to any MACsec slave apparatus (for example, the MACsec slave apparatus may be the first MACsec slave apparatus or the second MACsec slave apparatus). As shown in FIG. 1B, which is a flow schematic diagram of the method, the method may include the following processes:
Process 111: Obtain an interface identifier of a neighbor interface of a neighbor apparatus of the local MACsec slave apparatus and a MAC address of the neighbor interface, where the neighbor apparatus is another MACsec slave apparatus connected to the local MACsec slave apparatus.
Process 112: Send a parameter request packet to the MACsec master apparatus, where the parameter request packet includes an interface identifier of a local interface of the local MACsec slave apparatus, a MAC address of the local interface, an interface identifier of the neighbor interface of the neighbor apparatus, and a MAC address of the neighbor interface, where the local interface may be connected to the neighbor interface.

For example, in response to determining the local MACsec slave apparatus is the first MACsec slave apparatus, the neighbor apparatus of the local MACsec slave apparatus may be the second MACsec slave apparatus, the local interface is the first interface of the first MACsec slave apparatus, and the neighbor interface is the second interface of the second MACsec slave apparatus.

Alternatively, in response to determining the local MACsec slave apparatus is the second MACsec slave apparatus, the neighbor apparatus of the local MACsec slave apparatus may be the first MACsec slave apparatus, the local interface is the second interface of the second MACsec slave apparatus, and the neighbor interface is the first interface of the first MACsec slave apparatus.

Process 113: Receive MACsec parameters corresponding to the local MACsec slave apparatus sent by the MACsec master apparatus. For example, the MACsec parameters may be obtained by the MACsec master apparatus in response to determining it determines that the local interface and the neighbor interface are successfully paired based on the parameter request packet.

Process 114: Perform MACsec communication with the neighbor apparatus based on the MACsec parameters.

It may be seen from the above technical solutions that in the examples of the present disclosure, the adjacency relationship of MACsec slave apparatuses is reported to the MACsec master apparatus, and the MACsec master apparatus obtains MACsec parameters of the MACsec slave apparatuses, thereby centralizing the MACsec parameters to the MACsec master apparatus for processing. The MACsec master apparatus centrally manages the MACsec parameters and sends the MACsec parameters to the MACsec slave apparatuses to complete the configuration of the MACsec parameters, simplifying the MACsec parameter configuration work, achieving automatic deployment of the MACsec parameters, making the deployment and operation and maintenance of MACsec relatively simple, and solving the problem of complex MACsec deployment.

In an example, in response to determining the first MACsec slave apparatus sends the first parameter request packet to the MACsec master apparatus, the first parameter request packet includes first MACsec desire information, where the first MACsec desire information indicates that the first MACsec slave apparatus expects to perform MACsec protection on the first interface, or the first MACsec desire information indicates that the first MACsec slave apparatus does not expect to perform MACsec protection on the first interface.

the second MACsec slave apparatus sends the second parameter request packet to the MACsec master apparatus, the second parameter request packet may include second MACsec desire information, where the second MACsec desire information indicates that the second MACsec slave apparatus expects to perform MACsec protection on the second interface, or the second MACsec desire information indicates that the second MACsec slave apparatus does not expect to perform MACsec protection on the second interface.

The process of the MACsec master apparatus obtaining first MACsec parameters corresponding to the first MACsec slave apparatus and second MACsec parameters corresponding to the second MACsec slave apparatus may include the following: In response to the first MACsec desire information indicating that the first MACsec slave apparatus expects to perform MACsec protection on the first interface and the second MACsec desire information indicating that the second MACsec slave apparatus expects to perform MACsec protection on the second interface, obtain the first MACsec parameters corresponding to the first MACsec slave apparatus and obtain the second MACsec parameters corresponding to the second MACsec slave apparatus. Alternatively, in response to the first MACsec desire information indicating that the first MACsec slave apparatus does not expect to perform MACsec protection on the first interface, and/or the second MACsec desire information indicating that the second MACsec slave apparatus does not expect to perform MACsec protection on the second interface, end the parameter configuration process, and the MACsec master apparatus is prohibited from obtaining MACsec parameters corresponding to the MACsec slave apparatuses.

In an example, among all MACsec parameters, there are first type parameters and second type parameters. The first type parameters are MACsec parameters that allow two MACsec slave apparatuses to adopt the same parameter value, and the second type parameters are MACsec parameters that allow two MACsec slave apparatuses to adopt the same or different parameter values.

The process of the MACsec master apparatus obtaining first MACsec parameters corresponding to the first MACsec slave apparatus and second MACsec parameters corresponding to the second MACsec slave apparatus may include the following: For each first type parameter, obtain a reference parameter value of the first type parameter, where the reference parameter value is selected from a parameter value set or is a default parameter value. For each second type parameter, obtain a first parameter value and a second parameter value of the second type parameter, where the first parameter value and the second parameter value may be the same or different, the first parameter value is selected from a parameter value set or is a default parameter value, and the second parameter value is selected from a parameter value set or is a default parameter value.

Obtain the first MACsec parameters, where the first MACsec parameters include the reference parameter value of each first type parameter and the first parameter value of each second type parameter; obtain the second MACsec parameters, where the second MACsec parameters include the reference parameter value of each first type parameter and the second parameter value of each second type parameter.

In an example, the process of sending the first MACsec parameters to the first MACsec slave apparatus and sending the second MACsec parameters to the second MACsec slave apparatus may include the following: Send a first parameter response packet to the first MACsec slave apparatus, where the first parameter response packet includes an interface identifier of the first interface of the first MACsec slave apparatus, a MAC address of the first interface, an interface identifier of the second interface of the second MACsec slave apparatus, a MAC address of the second interface, and the first MACsec parameters; send a second parameter response packet to the second MACsec slave apparatus, where the second parameter response packet includes an interface identifier of the second interface of the second MACsec slave apparatus, a MAC address of the second interface, an interface identifier of the first interface of the first MACsec slave apparatus, a MAC address of the first interface, and the second MACsec parameters.

In an example, the first parameter request packet and the second parameter request packet include a first BGP update packet, where the first BGP update packet includes a first NLRI field and a first MACsec attribute field; the first NLRI field includes an address family identifier and a variable-length NLRI field, the address family identifier indicates that the first NLRI field carries MACsec information, and the variable-length NLRI field includes an interface identifier and a MAC address; the first MACsec attribute field includes MACsec desire information. The first parameter response packet and the second parameter response packet include a second BGP update packet, where the second BGP update packet includes a second NLRI field and a second MACsec attribute field; the second NLRI field includes an address family identifier and a variable-length NLRI field, the address family identifier indicates that the second NLRI field carries MACsec information, and the variable-length NLRI field includes an interface identifier and a MAC address; the second MACsec attribute field includes MACsec parameters.

Hereinafter, the parameter configuration method in the examples of the present disclosure will be described in conjunction with specific scenarios.

All apparatuses are divided into an MACsec master apparatus and MACsec slave apparatuses. There may be one MACsec master apparatus and two or more MACsec slave apparatuses. For the convenience of description, taking two MACsec slave apparatuses as an example, these two MACsec slave apparatuses are referred to as a first MACsec slave apparatus and a second MACsec slave apparatus. In response to determining there are more MACsec slave apparatuses, the parameter configuration process for the MACsec slave apparatuses is similar.

For example, a Route Reflector (RR ) may be used as the MACsec master apparatus, or other types of network apparatuses may be used as the MACsec master apparatus, with no restrictions imposed thereon. Network apparatuses (such as routers, switches, etc.) may be used as MACsec slave apparatuses, or other types of network apparatuses may be used as MACsec slave apparatuses, as long as the MACsec slave apparatuses have traffic forwarding requirements.

Referring to FIG. 2, which is a schematic diagram of the networking of an MACsec network, network apparatus C serves as the MACsec master apparatus, and network apparatuses A and B serve as the MACsec slave apparatuses. For example, network apparatus A serves as the first MACsec slave apparatus, and network apparatus B serves as the second MACsec slave apparatus; alternatively, network apparatus A serves as the second MACsec slave apparatus, and network apparatus B serves as the first MACsec slave apparatus.

In FIG. 2, interface a1 of network apparatus A (such as the first MACsec slave apparatus) is connected to interface b1 of network apparatus B (such as the second MACsec slave apparatus). Interface a1 may be referred to as the first interface of the first MACsec slave apparatus, and interface b1 may be referred to as the second interface of the second MACsec slave apparatus.

In an example, the MACsec master apparatus may establish a BGP (Border Gateway Protocol) neighbor relationship with each MACsec slave apparatus, and the MACsec slave apparatuses may establish an LLDP (Link Layer Discovery Protocol) neighbor relationship with each other.

In FIG. 2, network apparatus C establishes a BGP neighbor relationship with network apparatus A, network apparatus C establishes a BGP neighbor relationship with network apparatus B, and network apparatus A establishes an LLDP neighbor relationship with network apparatus B.

For example, LLDP provides a link layer discovery method that enables apparatuses from different vendors to discover each other and exchange their respective information in a network. LLDP encapsulates the information of the local apparatus (such as primary capabilities, management address, apparatus identifier, interface identifier, etc.) in an LLDPDU (Link Layer Discovery Protocol Data Unit) and distributes the information of the local apparatus to directly connected neighbors. The neighbors store this information after receiving the information of the local apparatus.

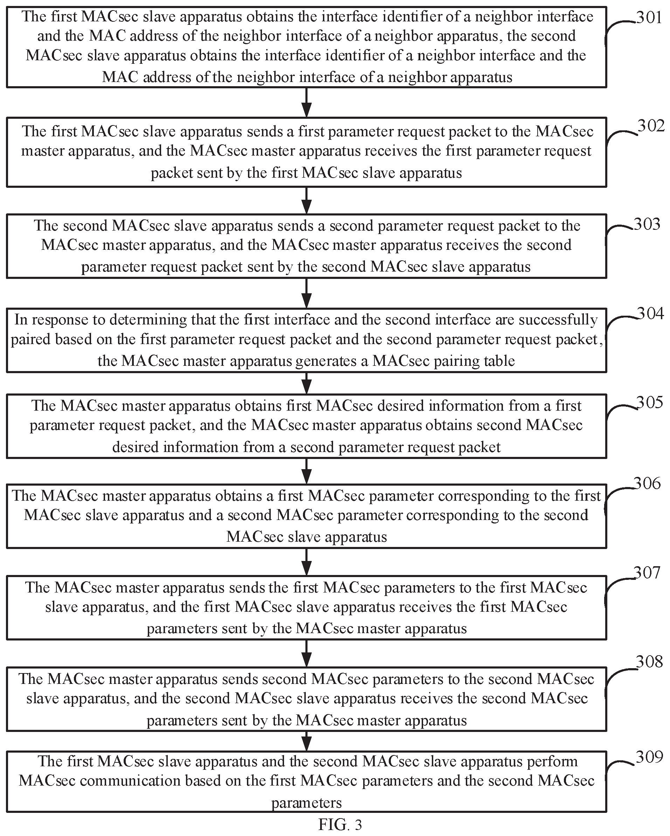

Under the above scenario, a parameter configuration method is proposed in the examples of the present disclosure. Referring to FIG. 3, which is a schematic diagram of the parameter configuration method, the parameter configuration method may include:
Process 301: the first MACsec slave apparatus obtains the interface identifier of a neighbor interface and the MAC address of the neighbor interface of a neighbor apparatus, where the neighbor apparatus is the second MACsec slave apparatus connected to the first MACsec slave apparatus.

The second MACsec slave apparatus obtains the interface identifier of a neighbor interface and the MAC address of the neighbor interface of a neighbor apparatus, where the neighbor apparatus is the first MACsec slave apparatus connected to the second MACsec slave apparatus.

Referring to FIG. 2, the first interface (such as interface a1) of the first MACsec slave apparatus (such as network apparatus A) is connected to the second interface (such as interface b1) of the second MACsec slave apparatus (such as network apparatus B), and the first MACsec slave apparatus establishes an LLDP neighbor relationship with the second MACsec slave apparatus. Based on this, the first MACsec slave apparatus may obtain the LLDP neighbor information of the second MACsec slave apparatus, and the LLDP neighbor information may include the interface identifier of the second interface of the second MACsec slave apparatus and the MAC address of the second interface. Similarly, the second MACsec slave apparatus may obtain the LLDP neighbor information of the first MACsec slave apparatus, and the LLDP neighbor information may include the interface identifier of the first interface of the first MACsec slave apparatus and the MAC address of the first interface.

Process 302: the first MACsec slave apparatus sends a first parameter request packet to the MACsec master apparatus, and the MACsec master apparatus receives the first parameter request packet sent by the first MACsec slave apparatus.

In an example, the first parameter request packet may include the interface identifier of the first interface (i.e., the local interface) of the first MACsec slave apparatus and the MAC address of the first interface, the interface identifier of the neighbor interface and the MAC address of the neighbor interface of the neighbor apparatus of the first MACsec slave apparatus, and the neighbor interface of the neighbor apparatus is connected to the first interface. For example, the neighbor interface of the neighbor apparatus may be the second interface of the second MACsec slave apparatus.

For example, referring to FIG. 2, the first parameter request packet may include the physical link neighbor relationship obtained based on LLDP, and the physical link neighbor relationship may include, but is not limited to: the interface identifier (such as 1/0/1) and MAC address (such as 1-1-1) of interface a1 of network apparatus A, the interface identifier (such as 2/0/1) and MAC address (such as 2-2-2) of interface b1 of network apparatus B, where interface b1 is connected to interface a1.

In an example, in response to determining the first MACsec slave apparatus sends the first parameter request packet to the MACsec master apparatus, the first parameter request packet includes first MACsec desire information, which indicates whether the first MACsec slave apparatus expects MACsec protection. The first MACsec desire information indicates that the first MACsec slave apparatus expects MACsec protection for the first interface, or the first MACsec desire information indicates that the first MACsec slave apparatus does not expect MACsec protection for the first interface.

In an example, the first MACsec slave apparatus determines whether the first interface has enabled the MACsec desire function. In response to determining the first interface has enabled the MACsec desire function, it indicates that MACsec protection is expected. Therefore, the first MACsec slave apparatus sends the first parameter request packet to the MACsec master apparatus, and the first MACsec desire information indicates that the first MACsec slave apparatus expects MACsec protection for the first interface.

In response to determining the first interface has not enabled the MACsec desire function, it indicates that MACsec protection is not expected. Therefore, the first MACsec slave apparatus does not send the first parameter request packet to the MACsec master apparatus.

In an example, in response to determining the first MACsec slave apparatus sends the first parameter request packet to the MACsec master apparatus, it may also encrypt the first parameter request packet and send the encrypted first parameter request packet to the MACsec master apparatus. For example, the first parameter request packet may be encrypted using an SSL (Secure Sockets Layer) encryption method, or the first parameter request packet may be encrypted using an IPsec (IP Security) encryption method. For example, SSL is a security protocol that provides a secure connection for application layer protocols (such as BGP, HTTP, etc.) based on TCP. IPsec is a three-layer tunnel encryption protocol that provides high-quality, cryptography-based security guarantees for data.

In an example, the first parameter request packet may include a BGP update packet (BGP UPDATE packet), that is, using the BGP update packet as the first parameter request packet. Of course, other protocol packets of the BGP type may also be used as the first parameter request packet, or other protocol packets of non-BGP types may be used as the first parameter request packet, with no restrictions imposed thereon. The following description takes the BGP update packet as an example.

The BGP update packet may include an NLRI (Network Layer Reachability Information) field and a MACsec attribute field. The NLRI field may include an address family identifier and a variable-length NLRI field. The address family identifier indicates that the NLRI field carries MACsec information, and the variable-length NLRI field may include interface identifiers and MAC addresses, such as the interface identifier of the first interface and the MAC address of the first interface of the first MACsec slave apparatus, and the interface identifier of the second interface and the MAC address of the second interface of the second MACsec slave apparatus. The MACsec attribute field may include the first MACsec desire information, which indicates that the first MACsec slave apparatus expects MACsec protection for the first interface.

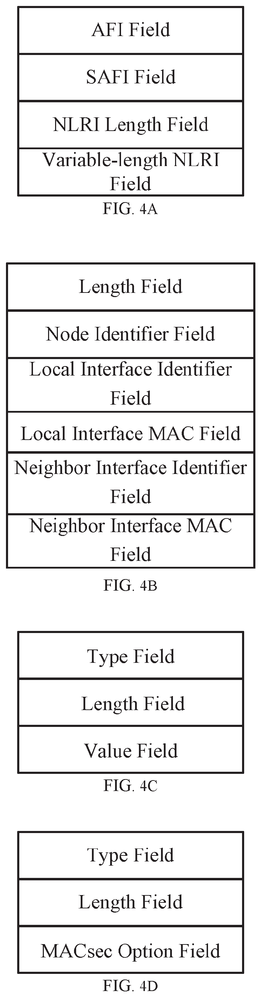

For example, with regard to a BGP update packet, a new NLRI field may be defined for the BGP update packet, and the new NLRI field is called a MACsec NLRI fields. Refer to Fig. 4A, which shows a schematic diagram of the MACsec NLRI fields. The MACsec NLRI fields may include an Address Family Identifier (AFI) field, a Subsequent Address Family Identifier (SAFI) field, an NLRI length field, and a variable-length NLRI field. Among the MACsec NLRI fields, the AFI field and the SAFI field represent an address family identifier and are to indicate that the NLRI field carries MACsec information. For example, the AFI field is an unused AFI value used to represent the MACsec address family and may be 2 bytes. The SAFI field is any value used to represent MACsec and may be 1 byte, and other values of the SAFI field are reserved. Among the MACsec NLRI fields, the NLRI length field represents the length of the MACsec NLRI fields and may be 1 byte.

For example, with regard to the variable-length NLRI field, refer to Fig. 4B, which shows a schematic diagram of the variable-length NLRI field. The variable-length NLRI field may include a length field (Length, e.g., 2 bytes), a node identifier field (Node ID, e.g., 4 bytes), a local interface identifier field (Local Interface ID, e.g., 9 bytes), a local interface MAC field (Local Interface MAC, e.g., 6 bytes), a neighbor interface identifier field (Neighbor Interface ID, e.g., 9 bytes), and a neighbor interface MAC field (Neighbor Interface MAC, e.g., 6 bytes), and the variable-length NLRI field is not limited to the above fields.

The length field represents the length of the variable-length NLRI field. The node identifier field is a Router ID (routing identifier) configured for local BGP and may be the IP address of a first MACsec slave apparatus, such as 1.1.1.1. The local interface identifier field is an interface ID for which MACsec desire is locally enabled and may be the interface identifier of a first interface of the first MACsec slave apparatus, such as 1/0/1. The local interface MAC field is the interface MAC for which MACsec desire is locally enabled and may be the MAC address of the first interface of the first MACsec slave apparatus, such as 1-1-1. The neighbor interface identifier field is a neighbor interface ID discovered by the first interface based on LLDP and may be the interface identifier of a second interface of a second MACsec slave apparatus, such as 2/0/1. The neighbor interface MAC field is the neighbor interface MAC discovered by the first interface based on LLDP and may be the MAC address of the second interface of the second MACsec slave apparatus, such as 2-2-2. For the local interface identifier field and the neighbor interface identifier field, the ASCII code values of English letters and slashes in the interface identifiers may also be converted into binary representations.

In an example, with regard to the MACsec attribute field (MACsec Attribute field) of the BGP update packet, the MACsec attribute field may be located in front of the MACsec NLRI field or behind the MACsec NLRI field. Refer to Fig. 4C, which shows a schematic diagram of the MACsec attribute field. The MACsec attribute field may include a type field (Type, e.g., 2 bytes), a length field (Length, e.g., 2 bytes), and a value field (value, e.g., variable length).

The type field may represent the type of the MACsec attribute field. For example, in response to determining the value of the type field is 0, it indicates that the MACsec attribute field is sent by a MACsec slave apparatus; in response to determining the value of the type field is 1, it indicates that the MACsec attribute field is sent by a MACsec master apparatus. Therefore, in response to determining the first MACsec slave apparatus sends a first parameter request packet to the MACsec master apparatus, the value of the type field is 0.

The length field may represent the length of the MACsec attribute field. The value field may represent the value of the MACsec attribute field. For example, the value field of the MACsec attribute field may be a MACsec option field. Refer to Fig. 4D, which shows a schematic diagram of the MACsec attribute field. The MACsec attribute field may include a type field (Type), a length field (Length), and a MACsec option field (MACsec Option, e.g., 1 byte). For example, the MACsec option field includes first MACsec desire information, and the first MACsec desire information indicates that the first MACsec slave apparatus expects MACsec protection for the first interface.

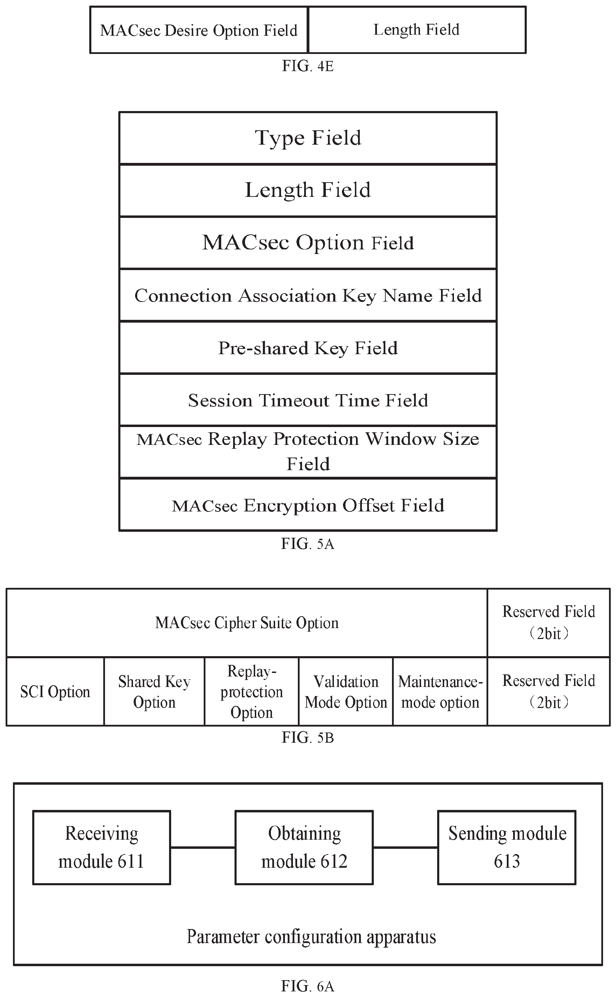

Refer to Fig. 4E, which shows a schematic diagram of the MACsec option field. The MACsec option field may include a MACsec desire option field (Desire Option, e.g., 1 bit) and a reserved field (reserve, e.g., 7 bits). The value of the MACsec desire option field is 0 or 1 (binary), where 0 represents that MACsec protection is not desired, and 1 represents that MACsec protection is desired. In response to determining the first MACsec slave apparatus sends the first parameter request packet to the MACsec master apparatus, the value of the MACsec desire option field is 1.

Process 303: the second MACsec slave apparatus sends a second parameter request packet to the MACsec master apparatus, and the MACsec master apparatus receives the second parameter request packet sent by the second MACsec slave apparatus.

In an example, the second parameter request packet may include the interface identifier of a second interface (i.e., the local interface) of the second MACsec slave apparatus, the MAC address of the second interface, the interface identifier of a neighbor interface of a neighbor apparatus of the second MACsec slave apparatus, and the MAC address of the neighbor interface, and the neighbor interface of the neighbor apparatus is connected to the second interface. For example, the neighbor interface of the neighbor apparatus may be the first interface of the first MACsec slave apparatus.

For example, refer to Fig. 2. The second parameter request packet may include the interface identifier (e.g., 2/0/1) and MAC address (e.g., 2-2-2) of interface b1 of network apparatus B, and the interface identifier (e.g., 1/0/1) and MAC address (e.g., 1-1-1) of interface a1 of network apparatus A, where interface a1 is connected to interface b1.

In an example, in response to determining the second MACsec slave apparatus sends the second parameter request packet to the MACsec master apparatus, the second parameter request packet includes second MACsec desire information, and the second MACsec desire information indicates whether the second MACsec slave apparatus expects MACsec protection. The second MACsec desire information indicates that the second MACsec slave apparatus expects MACsec protection for the second interface, or the second MACsec desire information indicates that the second MACsec slave apparatus does not expect MACsec protection for the second interface.

In an example, the second parameter request packet may include a BGP update packet (BGP UPDATE packet). The BGP update packet may include an NLRI field and a MACsec attribute field. The NLRI field includes an address family identifier and a variable-length NLRI field. The address family identifier indicates that the NLRI field carries MACsec information, and the variable-length NLRI field may include interface identifiers and MAC addresses, such as the interface identifier of the second interface of the second MACsec slave apparatus and the MAC address of the second interface, and the interface identifier of the first interface of the first MACsec slave apparatus and the MAC address of the first interface. The MACsec attribute field may include the second MACsec desire information, and the second MACsec desire information indicates that the second MACsec slave apparatus expects MACsec protection for the second interface.

In an example, Process 303 is similar to Process 302 and will not be repeated here.

Process 304: in response to determining that the first interface and the second interface are successfully paired based on the first parameter request packet and the second parameter request packet, the MACsec master apparatus generates a MACsec pairing table, which is to record the interface identifiers of the successfully paired first interface and second interface and the MAC address of the second interface.

In an example, the MACsec master apparatus may obtain, from the first parameter request packet, the interface identifier of the first interface of the first MACsec slave apparatus, the MAC address of the first interface, the interface identifier of the neighbor interface of the neighbor apparatus of the first MACsec slave apparatus, and the MAC address of the neighbor interface. The MACsec master apparatus may obtain, from the second parameter request packet, the interface identifier of the second interface of the second MACsec slave apparatus, the MAC address of the second interface, the interface identifier of the neighbor interface of the neighbor apparatus of the second MACsec slave apparatus, and the MAC address of the neighbor interface.

In response to determining the interface identifier of the neighbor interface of the neighbor apparatus of the first MACsec slave apparatus is the same as the interface identifier of the second interface of the second MACsec slave apparatus, the MAC address of the neighbor interface of the neighbor apparatus of the first MACsec slave apparatus is the same as the MAC address of the second interface of the second MACsec slave apparatus, the interface identifier of the neighbor interface of the neighbor apparatus of the second MACsec slave apparatus is the same as the interface identifier of the first interface of the first MACsec slave apparatus, and the MAC address of the neighbor interface of the neighbor apparatus of the second MACsec slave apparatus is the same as the MAC address of the first interface of the first MACsec slave apparatus, the MACsec master apparatus determines that the first interface and the second interface are successfully paired and generates the MACsec pairing table. Otherwise, the MACsec master apparatus determines that the first interface and the second interface fail to be paired and does not generate the MACsec pairing table.

The MACsec pairing table may include the interface identifier of the first interface of the first MACsec slave apparatus, the MAC address of the first interface, the interface identifier of the second interface of the second MACsec slave apparatus, and the MAC address of the second interface. Refer to Table 1, which shows an example of the MACsec pairing table, and there are no restrictions on this MACsec pairing table.

**Table 1**

| | First MACsec Slave Apparatus | Second MACsec Slave Apparatus |
|---|---|---|
| Node Identifier | 1.1.1.1 | 2.2.2.2 |
| Interface Identifier | 1/0/1 | 2/0/1 |
| MAC Address | 1-1-1 | 2-2-2 |

Process 305: the MACsec master apparatus obtains first MACsec desired information from a first parameter request packet, and the MACsec master apparatus obtains second MACsec desired information from a second parameter request packet, and adds the first MACsec desired information and the second MACsec desired information to a MACsec pairing table.

For example, the first MACsec desired information indicates that a first MACsec slave apparatus desires to perform MACsec protection on a first interface, or the first MACsec desired information indicates that the first MACsec slave apparatus does not desire to perform MACsec protection on the first interface. In addition, the second MACsec desired information indicates that a second MACsec slave apparatus desires to perform MACsec protection on a second interface, or the second MACsec desired information indicates that the second MACsec slave apparatus does not desire to perform MACsec protection on the second interface.

Referring to Table 2, which shows an example of an updated MACsec pairing table. In Table 2, in response to determining MACsec Desire is "Yes", it indicates a desire to perform MACsec protection on the first interface or the second interface.

**Table 2**

| | First MACsec Slave Apparatus | Second MACsec Slave Apparatus |
|---|---|---|
| Node Identifier | 1.1.1.1 | 2.2.2.2 |
| Interface Identifier | 1/0/1 | 2/0/1 |
| MAC Address | 1-1-1 | 2-2-2 |
| MACsec Desire | Yes | Yes |

Process 306: in response to determining the first MACsec desired information indicates that the first MACsec slave apparatus desires to perform MACsec protection on the first interface, and the second MACsec desired information indicates that the second MACsec slave apparatus desires to perform MACsec protection on the second interface, then the MACsec master apparatus obtains a first MACsec parameter corresponding to the first MACsec slave apparatus and a second MACsec parameter corresponding to the second MACsec slave apparatus.

In one example, to achieve MACsec communication, it is necessary to configure multiple types of MACsec parameters, and among all types of MACsec parameters, there are first type parameters and second type parameters. The first type parameters are MACsec parameters that allow two MACsec slave apparatuses to adopt the same parameter value, and the second type parameters are MACsec parameters that allow two MACsec slave apparatuses to adopt the same or different parameter values.

For example, among all MACsec parameters, there are first type parameters A (such as first type parameter A1, first type parameter A2, ...) and second type parameters B (such as second type parameter B1, second type parameter B2, ...).

For each first type parameter, the MACsec master apparatus may obtain a reference parameter value of the first type parameter. The reference parameter value may be selected from a parameter value set, or the reference parameter value may be a pre-configured parameter value (such as a parameter value configured by a user), or the reference parameter value may be a default parameter value.

For example, for the first type parameter A1 (the implementation process for other first type parameters is similar), a parameter value set may be pre-configured for the first type parameter A1, and the parameter value set may include multiple parameter values for the first type parameter A1. The MACsec master apparatus may select a parameter value from the parameter value set as the reference parameter value of the first type parameter A1, such as randomly selecting a parameter value as the reference parameter value of the first type parameter A1, or selecting a parameter value using a certain strategy (such as preferentially selecting the minimum value or preferentially selecting the maximum value) as the reference parameter value of the first type parameter A1; there is no restriction on the selection method.

For example, for the first type parameter A1, a user may pre-configure a reference parameter value for the first type parameter A1, and thus, the parameter value configured by the user may be used as the reference parameter value of the first type parameter A1.

For example, for the first type parameter A1, a default parameter value (i.e., a default value) may be used as the reference parameter value of the first type parameter A1. For example, in response to determining no reference parameter value is selected from the parameter value set and the user does not pre-configure a reference parameter value, it indicates that the reference parameter value of the first type parameter A1 is the default value, and therefore, the default parameter value (i.e., a fixedly stored parameter value) is used as the reference parameter value of the first type parameter A1.

The above are merely examples of obtaining the reference parameter value of the first type parameter, and there is no restriction on the obtaining method.

For each second type parameter, the MACsec master apparatus may obtain a first parameter value and a second parameter value of the second type parameter, and the first parameter value and the second parameter value may be the same or different. The first parameter value may be selected from a parameter value set, or the first parameter value may be a pre-configured parameter value (such as a parameter value configured by a user), or the first parameter value may be a default parameter value. The second parameter value may be selected from a parameter value set, the second parameter value may be a pre-configured parameter value (such as a parameter value configured by a user), or the second parameter value may be a default parameter value.

For example, for the second type parameter B1 (the implementation process for other second type parameters is similar), a parameter value set may be pre-configured for the second type parameter B1, and the parameter value set may include multiple parameter values for the second type parameter B1. The MACsec master apparatus may select a parameter value from the parameter value set as the first parameter value of the second type parameter B1, such as randomly selecting a parameter value as the first parameter value of the second type parameter B1, or selecting a parameter value using a certain strategy (such as selecting the minimum value as a priority or selecting the maximum value as a priority) as the first parameter value of the second type parameter B1. The MACsec master apparatus may select a parameter value from the parameter value set as the second parameter value of the second type parameter B1, such as randomly selecting a parameter value as the second parameter value of the second type parameter B1, or selecting a parameter value using a certain strategy (such as selecting the minimum value as a priority or selecting the maximum value as a priority) as the second parameter value of the second type parameter B1.

In response to determining selecting the first parameter value and the second parameter value of the second type parameter B1, the same parameter value may be used as the first parameter value and the second parameter value, or different parameter values may be used as the first parameter value and the second parameter value.

For example, for the second type parameter B1, a user may pre-configure a first parameter value for the second type parameter B1, and the user may pre-configure a second parameter value for the second type parameter B1, and thus, the parameter values configured by the user may be used as the first parameter value and the second parameter value of the second type parameter B1. In response to determining the user configures the first parameter value and the second parameter value of the second type parameter B1, the same parameter value may be configured as the first parameter value and the second parameter value, or different parameter values may be configured as the first parameter value and the second parameter value.

For example, for the second type parameter B1, a default parameter value (i.e., a default value) may be used as the first parameter value of the second type parameter B1, and a default parameter value (i.e., a default value) may be used as the second parameter value of the second type parameter B1. For example, in response to determining no first parameter value and second parameter value are selected from the parameter value set and the user does not pre-configure a first parameter value and a second parameter value, it indicates that the parameter values of the second type parameter B1 are default values, and therefore, the default parameter values (i.e., fixedly stored parameter values) are used as the first parameter value and the second parameter value of the second type parameter B1. For example, the same default parameter value may be used as the first parameter value and the second parameter value, or different default parameter values may be used as the first parameter value and the second parameter value.

The above are merely examples of obtaining the parameter values of the second type parameter, and there is no restriction on the obtaining method.

In one example, based on the reference parameter value of each first type parameter, the first parameter value and the second parameter value of each second type parameter, the MACsec master apparatus obtains a first MACsec parameter and a second MACsec parameter. The first MACsec parameter may include the reference parameter value of each first type parameter and the first parameter value of each second type parameter. The second MACsec parameter may include the reference parameter value of each first type parameter and the second parameter value of each second type parameter. For example, the first MACsec parameter may include the reference parameter value of the first type parameter A1, the reference parameter value of the first type parameter A2, ..., the first parameter value of the second type parameter B1, the first parameter value of the second type parameter B2, .... In addition, the second MACsec parameter may include the reference parameter value of the first type parameter A1, the reference parameter value of the first type parameter A2, ..., the second parameter value of the second type parameter B1, the second parameter value of the second type parameter B2, ....

In one example, after obtaining the first MACsec parameter and the second MACsec parameter, the first MACsec parameter and the second MACsec parameter may also be added to the MACsec pairing table.

Refer to Table 3, which shows an example of an updated MACsec pairing table.

**Table 3**

| | First MACsec Slave Apparatus | Second MACsec Slave Apparatus |
|---|---|---|
| Node Identifier | 1.1.1.1 | 2.2.2.2 |
| Interface Identifier | 1/0/1 | 2/0/1 |
| MAC Address | 1-1-1 | 2-2-2 |
| MACsec Desire | Yes | Yes |
| first type parameterA1 | parameter value a1 | parameter value a1 |
| first type parameterA2 | parameter value a2 | parameter value a2 |
| ... | ... | ... |
| second type parameterB1 | parameter value b11 | parameter value b12 |
| second type parameterB2 | parameter value b21 | parameter value b22 |
| ... | ... | ... |

For the first type parameter A1, the first MACsec slave apparatus and the second MACsec slave apparatus adopt the same parameter value a1. For the second type parameter B1, the first MACsec slave apparatus adopts the parameter value b11, and the second MACsec slave apparatus adopts the parameter value b12, where the parameter value b12 may be the same as or different from the parameter value b11.

In an example, the first MACsec parameters and the second MACsec parameters include, but are not limited to, one or more of the following parameter values: a connection association key name, where the connection association key name is a first type parameter, and the first MACsec parameters and the second MACsec parameters include the same connection association key name. A pre-shared key, where the pre-shared key is a first type parameter, and the first MACsec parameters and the second MACsec parameters include the same pre-shared key. A session timeout time, where the session timeout time is a second type parameter, and the first MACsec parameters and the second MACsec parameters include the same session timeout time or different session timeout times. A MACsec replay protection window size, where the MACsec replay protection window size is a second type parameter, and the first MACsec parameters and the second MACsec parameters include the same MACsec replay protection window size or different MACsec replay protection window sizes. A MACsec encryption offset, where the MACsec encryption offset is a first type parameter, and the first MACsec parameters and the second MACsec parameters include the same MACsec encryption offset.

A MACsec encryption suite option, which may be a second type parameter, and the first MACsec parameters and the second MACsec parameters include the same MACsec encryption suite option or different MACsec encryption suite options. A secure channel identifier option, which may be a first type parameter, and the first MACsec parameters and the second MACsec parameters include the same secure channel identifier option. A shared key option, which may be a first type parameter, and the first MACsec parameters and the second MACsec parameters include the same shared key option. A replay protection function option, which may be a second type parameter, and the first MACsec parameters and the second MACsec parameters include the same replay protection function option or different replay protection function options. A verification mode option, which may be a second type parameter, and the first MACsec parameters and the second MACsec parameters include the same verification mode option or different verification mode options. A maintenance mode option, which may be a second type parameter, and the first MACsec parameters and the second MACsec parameters include the same maintenance mode option or different maintenance mode options.

For example, as shown in Table 4, which is an example of an updated MACsec pairing table.

**Table 4**

| | First MACsec Slave Apparatus | Second MACsec Slave Apparatus |
|---|---|---|
| Node Identifier | 1.1.1.1 | 2.2.2.2 |
| Interface Identifier | 1/0/1 | 2/0/1 |
| MAC Address | 1-1-1 | 2-2-2 |
| MACsec Desire | Yes | Yes |
| Connection Association Key Name | Connection Association Key Name 1 | Connection Association Key Name 1 |
| Pre-shared Key | Pre-shared Key 1 | Pre-shared Key 1 |
| Session Timeout Time | Session Timeout Time 1 | Session Timeout Time 2 |
| MACsec Replay Protection Window Size | MACsec Replay Protection Window Size 1 | MACsec Replay Protection Window Size 2 |
| MACsec Encryption Offset | MACsec Encryption Offset 1 | MACsec Encryption Offset 2 |
| ... | ... | ... |

Process 307: the MACsec master apparatus sends the first MACsec parameters to the first MACsec slave apparatus, and the first MACsec slave apparatus receives the first MACsec parameters sent by the MACsec master apparatus.

In an example, the MACsec master apparatus may send a first parameter response packet to the first MACsec slave apparatus. The first parameter response packet may include the interface identifier of the first interface and the MAC address of the first interface of the first MACsec slave apparatus, the interface identifier of the second interface and the MAC address of the second interface of the second MACsec slave apparatus, and the first MACsec parameters. The MACsec master apparatus may obtain the above information from the MACsec pairing table.

In an example, in response to determining the MACsec master apparatus sends the first parameter response packet to the first MACsec slave apparatus, it may also encrypt the first parameter response packet and send the encrypted first parameter response packet to the first MACsec slave apparatus. For example, the SSL encryption method or the IPsec encryption method may be used to encrypt the first parameter response packet.

In an example, the first parameter response packet may include a BGP update packet (BGP UPDATE packet), that is, using the BGP update packet as the first parameter response packet. Of course, other protocol packets of the BGP type or non-BGP type may also be used as the first parameter response packet, and there is no restriction on this. The BGP update packet is taken as an example for illustration.

The BGP update packet may include an NLRI field and a MACsec attribute field. The NLRI field may include an address family identifier and a variable-length NLRI field. The address family identifier indicates that the NLRI field carries MACsec information, and the variable-length NLRI field includes interface identifiers and MAC addresses, such as the interface identifier of the first interface and the MAC address of the first interface of the first MACsec slave apparatus, and the interface identifier of the second interface and the MAC address of the second interface of the second MACsec slave apparatus. In addition, the MACsec attribute field may include the first MACsec parameters.

For example, the NLRI field may be a MACsec NLRI field, and the content of the MACsec NLRI field is as described in Process 302, which is the same as the content of the MACsec NLRI field in the first parameter request packet.

In an example, for the MACsec attribute field (MACsec Attribute field) of the BGP update packet, the MACsec attribute field may be located in front of the MACsec NLRI field or behind the MACsec NLRI field. As shown in Figure 5A, which is a schematic diagram of the MACsec attribute field, the MACsec attribute field may include, but is not limited to, the following fields:
A type field (Type, e.g., 2 bytes), which may indicate the type of the MACsec attribute field. For example, in response to determining the value of the type field is 0, it indicates that the MACsec attribute field is sent by the MACsec slave apparatus; in response to determining the value of the type field is 1, it indicates that the MACsec attribute field is sent by the MACsec master apparatus. Therefore, in response to determining the MACsec master apparatus sends the first parameter response packet to the first MACsec slave apparatus, the value of the type field is 1. A length field (Length, e.g., 2 bytes), which may indicate the length of the MACsec attribute field. A MACsec option field (MACsec Option, e.g., 2 bytes), which is to carry some parameter values. The MACsec option field is described in the subsequent process.

In addition to the type field, the length field, and the MACsec option field, the MACsec attribute field may also involve fields related to the first MACsec parameters, that is, the following first MACsec parameters:
A connectivity association key name field, which is to carry the Connectivity Association Key Name (CKN Name ), which may also be called Shared key CKN Name, that is, the connectivity association key name of the shared key. For example, the connectivity association key name field may be 32 bytes or 64 bytes, and there is no restriction on this.

The connectivity association key name is to uniquely identify a pre-shared CAK (Connectivity Association Key, security connectivity set key) to distinguish different security association groups. For example, during the session negotiation process based on MACsec parameters, the negotiation packet carries the connectivity association key name. Only in response to determining the first MACsec slave apparatus and the second MACsec slave apparatus use the same connectivity association key name may they be identified as the same CA (Connectivity Association, connectivity association). In response to determining the first MACsec slave apparatus and the second MACsec slave apparatus use different connectivity association key names, they cannot be identified as the same CA, and the session negotiation process is terminated. Wherein, a CA is a collection of two or more members that use the same key and key algorithm suite.

The same connectivity association key name 1 is configured on the first interface of the first MACsec slave apparatus and the second interface of the second MACsec slave apparatus. Other interfaces of the first MACsec slave apparatus cannot be configured with this connectivity association key name 1 and may only be configured with other connectivity association key names. Other interfaces of the second MACsec slave apparatus may not be configured with this connectivity association key name 1 and may only be configured with other connectivity association key names.

A pre-shared key field, which is to carry the pre-shared key, that is, MACsec MKA CAK. The MKA protocol is a part of MACsec and is to discover MACsec peer nodes and negotiate the required security keys to protect the link. The CAK is the key used by CA participants, and MACsec MKA CAK is simply called the pre-shared key. For example, the pre-shared key field may be 64 bytes or 117 bytes.

The pre-shared key may be used as a root key to generate session keys, that is, to derive session keys, and the session keys may be SAKs (Security Association Keys, security association keys). The SAKs are derived from the pre-shared key based on an algorithm and are to encrypt the data transmitted between secure channels.

For example, the session keys are to encrypt the data packets between the first MACsec slave apparatus and the second MACsec slave apparatus. The first MACsec slave apparatus encrypts the data packets using the session keys and sends the encrypted data packets to the second MACsec slave apparatus. The second MACsec slave apparatus encrypts the data packets using the session keys and sends the encrypted data packets to the first MACsec slave apparatus.

During the session negotiation process based on MACsec parameters, the first MACsec slave apparatus generates key derivation parameters (such as Nonce) through the pre-shared key, and the negotiation packet carries the key derivation parameters. The second MACsec slave apparatus verifies the legitimacy of the first MACsec slave apparatus through the pre-shared key and the key derivation parameters. In response to determining the first MACsec slave apparatus is legitimate, the session negotiation process continues; in response to determining the first MACsec slave apparatus is illegitimate, the session negotiation process is terminated. The second MACsec slave apparatus generates key derivation parameters through the pre-shared key, and the negotiation packet carries the key derivation parameters. The first MACsec slave apparatus verifies the legitimacy of the second MACsec slave apparatus through the pre-shared key and the key derivation parameters. In response to determining the second MACsec slave apparatus is legitimate, the session negotiation process continues; in response to determining the second MACsec slave apparatus is illegitimate, the session negotiation process is terminated.

For example, during the session negotiation process based on MACsec parameters, the pre-shared keys used by the first MACsec slave apparatus and the second MACsec slave apparatus are directly configured. To ensure that the session between the first MACsec slave apparatus and the second MACsec slave apparatus may be normally established, the same pre-shared key is configured on the first interface of the first MACsec slave apparatus and the second interface of the second MACsec slave apparatus.

In response to determining generating session keys (i.e., key derivation) based on the pre-shared key, the AES-Key Wrap algorithm may be used to generate session keys in combination with the pre-shared key and a random number, and there is no restriction on this process.

Regarding the security requirements for the pre-shared key, the pre-shared key may be distributed offline securely, and the length of the pre-shared key needs to meet the requirements of the encryption suite. For example, the length of the pre-shared key may be 256 bits.

A session timeout time field, which is to carry the session timeout time, that is, MKA Timer MKA-life (MKA session timeout time). The session timeout time field may be 2 bytes.

The session timeout time is used to control the survival period of the session. After the session timeout is determined based on the session timeout time, renegotiation is triggered, that is, the session negotiation process based on MACsec parameters is re-executed.

During the session negotiation process based on MACsec parameters, the negotiation packet carries the session timeout time (the session timeout time may also be called the exchange timeout time, such as 60s, etc.). On this basis, the first MACsec slave apparatus may use the smaller value of the session timeout time as the target session timeout time, and the second MACsec slave apparatus may also use the smaller value of the session timeout time as the target session timeout time.

During the data packet transmission between the first MACsec slave apparatus and the second MACsec slave apparatus, in response to determining the first MACsec slave apparatus does not receive a data packet sent by the second MACsec slave apparatus within the target session timeout time, it determines that the session has timed out, terminates the current session key, and renegotiates. Similarly, in response to determining the second MACsec slave apparatus does not receive a data packet sent by the first MACsec slave apparatus within the target session timeout time, it determines that the session has timed out, terminates the current session key, and renegotiates.

A MACsec replay protection window size field, which is to carry the MACsec replay protection window size, that is, Replay-protection Window-size. The replay protection window may be simply called the Replay Window. The MACsec replay protection window size field may be 4 bytes.

The MACsec replay protection window size is to prevent attackers from replaying old packets and is implemented by maintaining a Packet Number (PN , packet sequence number) window. The MACsec replay protection window size is to discard replay data packets between the first MACsec slave apparatus and the second MACsec slave apparatus.

For example, the first MACsec slave apparatus may determine the PN window range based on the MACsec replay protection window size. For example, in response to determining the MACsec replay protection window size is 64 and the PN window range is 37-100, then in response to determining a data packet is not within the PN window range, such as the sequence number of the data packet is less than the lower limit of the PN window range, the first MACsec slave apparatus discards the data packet and does not forward the data packet.

During the session negotiation process based on MACsec parameters, the negotiation packet may include the MACsec replay protection window size, which indicates the maximum allowed PN interval. The first MACsec slave apparatus informs the second MACsec slave apparatus of its own MACsec replay protection window size through the negotiation packet but determines the PN window range based on its own MACsec replay protection window size. The second MACsec slave apparatus informs the first MACsec slave apparatus of its own MACsec replay protection window size through the negotiation packet.

In response to determining the MACsec replay protection window size is 0, it indicates that out-of-order or duplicate data packets are not allowed to be received. The MACsec replay protection window size is only valid in response to determining the replay protection function is enabled.

A MACsec encryption offset field, which is to carry the MACsec encryption offset, which may be called MACsec Confidentiality-Offset or MACsec Encryption Offset. The MACsec encryption offset field may be 1 byte.

The MACsec encryption offset is to indicate the starting encryption position of data packets between the first MACsec slave apparatus and the second MACsec slave apparatus and supports flexible encapsulation formats (such as whether VLAN tags are encrypted). For example, in response to determining the MACsec encryption offset is 16, it indicates that encryption starts from the 16th byte of the data packet. The values of the MACsec encryption offset may include 0 (decimal), 30 (decimal), and 50 (decimal), etc., and the unit that takes effect on the MACsec slave apparatus is byte.

During the session negotiation process based on MACsec parameters, the negotiation packet carries a MACsec encryption offset. In response to determining the first MACsec slave apparatus and the second MACsec slave apparatus adopt the same MACsec encryption offset, the session negotiation process continues. In response to determining the first MACsec slave apparatus and the second MACsec slave apparatus adopt different MACsec encryption offsets, the negotiation fails, and the session negotiation process is terminated.

In an example, in response to determining the encryption suite used by MACsec is the GCM-AES-128 encryption suite or the GCM-AES-XPN-128 encryption suite, the length of the connection association key name and the pre-shared key may be required to be 32 characters. Based on this, for a connection association key name with a length of less than 32 characters, zeros may be appended after the connection association key name to meet the requirement of 32 characters. For a connection association key name with a length greater than 32 characters, the first 32 characters of the connection association key name may be obtained. For a pre-shared key with a length of less than 32 characters, zeros may be appended after the pre-shared key to meet the requirement of 32 characters. For a pre-shared key with a length greater than 32 characters, the first 32 characters of the pre-shared key may be obtained.

In addition, for the GCM-AES-128 encryption suite, the MACsec encryption offset may be any value. For the GCM-AES-XPN-128 encryption suite, the MACsec encryption offset may be 0.

In an example, in response to determining the encryption suite used by MACsec is the GCM-AES-256 encryption suite or the GCM-AES-XPN-256 encryption suite, the length of the connection association key name and the pre-shared key may be required to be 64 characters. Based on this, for a connection association key name with a length of less than 64 characters, zeros may be appended after the connection association key name to meet the requirement of 64 characters. For a connection association key name with a length greater than 64 characters, the first 64 characters of the connection association key name may be obtained. For a pre-shared key with a length of less than 64 characters, zeros may be appended after the pre-shared key to meet the requirement of 64 characters. For a pre-shared key with a length greater than 64 characters, the first 64 characters of the pre-shared key may be obtained.

In addition, for the GCM-AES-256 encryption suite, the MACsec encryption offset may be any value. For the GCM-AES-XPN-256 encryption suite, the MACsec encryption offset may be 0.

In an example, as shown in Figure 5A, the MACsec attribute field may include a MACsec option field (e.g., 2 bytes). As shown in Figure 5B, which is a schematic diagram of the MACsec option field, the MACsec option field may involve fields related to the first MACsec parameters, namely, the following first MACsec parameters:
MACsec Cipher Suite Option: The MACsec encryption suite option may be 6 bits. The MACsec encryption suite option is used to indicate the list of encryption suites supported by the first MACsec slave apparatus, that is, which encryption suites the first MACsec slave apparatus supports. For example, the value of the MACsec encryption suite option may range from 1 to 100 (decimal). Starting from 1, it may correspond to encryption suites such as GCM-AES-128, GCM-AES-256, GCM-AES-XPN-128, and GCM-AES-XPN-256 respectively.

During the session negotiation process based on MACsec parameters, the negotiation packet may include an encryption suite list, that is, capability exchange is achieved through the negotiation packet. For example, in response to determining the first MACsec slave apparatus sends a negotiation packet to the second MACsec slave apparatus, the negotiation packet carries the encryption suite list of the first MACsec slave apparatus. The second MACsec slave apparatus determines, based on the encryption suite list of the first MACsec slave apparatus and the encryption suite list of the second MACsec slave apparatus, the encryption suite (e.g., the encryption suite with the highest priority) supported by both the first MACsec slave apparatus and the second MACsec slave apparatus, and performs encryption operations on data packets based on this encryption suite. Similarly, in response to determining the second MACsec slave apparatus sends a negotiation packet to the first MACsec slave apparatus, the negotiation packet carries the encryption suite list of the second MACsec slave apparatus. The first MACsec slave apparatus determines, based on the encryption suite list of the first MACsec slave apparatus and the encryption suite list of the second MACsec slave apparatus, the encryption suite (e.g., the encryption suite with the highest priority) supported by both the first MACsec slave apparatus and the second MACsec slave apparatus, and performs encryption operations on data packets based on this encryption suite.

SCI Option: The Secure Channel Identifier option may be 1 bit. The Secure Channel Identifier option is to indicate whether the data packets between the first MACsec slave apparatus and the second MACsec slave apparatus carry a Secure Channel Identifier. For example, the value of the Secure Channel Identifier option may be 0 or 1. 0 may represent that no Secure Channel Identifier is carried, and 1 may represent that a Secure Channel Identifier is carried.

Due to possible differences in the implementation of MACsec functions, in response to determining the SecTAG (Security Tag) of the data packet of the first MACsec slave apparatus carries an SCI (Secure Channel Identifier), and the SecTAG of the data packet of the second MACsec slave apparatus does not carry an SCI, it will result in the failure of data packet communication between the first MACsec slave apparatus and the second MACsec slave apparatus. By configuring the Secure Channel Identifier option, it is ensured that the configurations of the first MACsec slave apparatus and the second MACsec slave apparatus regarding whether to carry an SCI are consistent, that is, both apparatuses carry an SCI or both apparatuses do not carry an SCI.

For example, during the session negotiation process based on MACsec parameters, the negotiation packet may include a Secure Channel Identifier option. In response to determining the first MACsec slave apparatus and the second MACsec slave apparatus adopt the same Secure Channel Identifier option (e.g., both are 1 or both are 0), the session negotiation process continues. In response to determining the first MACsec slave apparatus and the second MACsec slave apparatus adopt different Secure Channel Identifier options, the session negotiation process is terminated. Through the above processing, it may be ensured that the Secure Channel Identifier options of the two apparatuses are consistent.

In response to determining the Secure Channel Identifier option of the second MACsec slave apparatus (or the first MACsec slave apparatus) indicates that a Secure Channel Identifier is carried, during the data packet transmission process, the first MACsec slave apparatus (or the second MACsec slave apparatus) performs conflict detection on the Secure Channel Identifier. Alternatively, in response to determining the Secure Channel Identifier option of the second MACsec slave apparatus indicates that no Secure Channel Identifier is carried, during the data packet transmission process, the first MACsec slave apparatus does not perform conflict detection on the Secure Channel Identifier. For example, the Secure Channel Identifier may be composed of the MAC address of an interface and an interface identifier and is used to identify the source of data packets.

Shared Key Option: The shared key option may be 1 bit. The shared key option is to indicate whether the key distribution mode of data packets between the first MACsec slave apparatus and the second MACsec slave apparatus is a ciphertext mode or a plaintext mode. For example, the value of the shared key option may be 0 or 1. 0 may represent Cipher, that is, the key distribution mode adopts the ciphertext mode (the key is in ciphertext), and 1 represents simple, that is, the key distribution mode adopts the plaintext mode (the key is in plaintext).

For example, during the session negotiation process based on MACsec parameters, the negotiation packet may include a shared key option. In response to determining the first MACsec slave apparatus and the second MACsec slave apparatus adopt the same shared key option (e.g., both are 1 or both are 0), the session negotiation process continues. In response to determining the first MACsec slave apparatus and the second MACsec slave apparatus adopt different shared key options, the session negotiation process is terminated.

For example, in response to determining the key distribution mode adopts the ciphertext mode, in response to determining transmitting the key of data packets between the first MACsec slave apparatus and the second MACsec slave apparatus, the key may be encrypted, and the encrypted ciphertext key is transmitted. In response to determining the key distribution mode adopts the plaintext mode, in response to determining transmitting the key of data packets between the first MACsec slave apparatus and the second MACsec slave apparatus, the plaintext key may be transmitted.

Replay-protection Option: The replay-protection option may be 1 bit. The replay-protection option is used to indicate whether to enable or disable replay protection for data packets between the first MACsec slave apparatus and the second MACsec slave apparatus. For example, the value of the replay-protection option may be 0 or 1. 0 may represent that replay protection for data packets is disabled, that is, replay protection is turned off, and 1 may represent that replay protection for data packets is enabled, that is, replay protection is turned on.

For example, during the session negotiation process based on MACsec parameters, the negotiation packet may include a replay-protection option. Based on the replay-protection option of the second MACsec slave apparatus, the first MACsec slave apparatus may learn whether the second MACsec slave apparatus enables or disables replay protection. In addition, based on the replay-protection option of the first MACsec slave apparatus, the second MACsec slave apparatus may learn whether the first MACsec slave apparatus enables or disables replay protection.

For example, in response to determining replay protection is enabled, in response to determining transmitting data packets between the first MACsec slave apparatus and the second MACsec slave apparatus, reordering of data packets may occur. The MACsec replay protection mechanism allows a certain degree of out-of-order data packets. The sequence numbers of these out-of-order data packets within a user-specified window range may be legally received; otherwise, data packets outside the window range will be discarded.

For example, in response to determining replay protection is disabled, in response to determining transmitting data packets between the first MACsec slave apparatus and the second MACsec slave apparatus, out-of-order data packets will be discarded rather than legally received.

Validation Mode Option: The validation mode option may be 2 bits. The validation mode option is used to indicate whether to perform integrity validation on data packets between the first MACsec slave apparatus and the second MACsec slave apparatus. In response to determining integrity validation is performed on data packets, the validation mode option is used to indicate whether to discard data packets that fail the validation. For example, the value of the validation mode option may be 00, 01, or 10. 00 represents the disable mode, 01 represents the check mode, and 10 represents the strict mode. The check mode is a mode for checking, which means performing integrity validation on data packets between the first MACsec slave apparatus and the second MACsec slave apparatus and not discarding data packets that fail the validation. The disabled mode is a mode for de-enabling, which means not performing integrity validation on data packets between the first MACsec slave apparatus and the second MACsec slave apparatus. The strict mode is a mode for strict validation, which means performing integrity validation on data packets between the first MACsec slave apparatus and the second MACsec slave apparatus and discarding data packets that fail the validation.

For example, during the session negotiation process based on MACsec parameters, the negotiation packet may include a validation mode option. Based on the validation mode option of the second MACsec slave apparatus, the first MACsec slave apparatus may learn the validation mode of the second MACsec slave apparatus. Based on the validation mode option of the first MACsec slave apparatus, the second MACsec slave apparatus may learn the validation mode of the first MACsec slave apparatus.

For example, in response to determining the validation mode is the check mode, the first MACsec slave apparatus (or the second MACsec slave apparatus) needs to perform integrity validation on data packets. In response to determining the validation fails, the data packets that fail the validation are not discarded. In response to determining the validation mode is the disabled mode, the first MACsec slave apparatus does not perform integrity validation on data packets. In response to determining the validation mode is the strict mode, the first MACsec slave apparatus performs integrity validation on data packets. In response to determining the validation fails, the data packets that fail the validation are discarded.

For example, in response to determining performing integrity validation on data packets, a session key derived from a pre-shared key may be used to calculate an ICV (Integrity Check Value) to obtain the first ICV. The tail of the data packet carries the second ICV (i.e., an ICV calculated in the same way). Then, it is compared whether the first ICV and the second ICV are the same. In response to determining they are the same, the validation is successful; in response to determining they are different, the validation fails.

A Maintenance-mode option, which may be 1 bit, is to indicate whether the maintenance mode is enabled. In response to determining the maintenance mode is enabled, data packets between a first MACsec slave apparatus and a second MACsec slave apparatus are allowed to be forwarded before the completion of MACsec negotiation. In response to determining the maintenance mode is not enabled, data packets between the first MACsec slave apparatus and the second MACsec slave apparatus are prohibited from being forwarded before the completion of MACsec negotiation. For example, the value of the Maintenance-mode option may be 0 or 1, where 0 represents that the maintenance mode is not enabled, and 1 represents that the maintenance mode is enabled.

For example, during session negotiation based on MACsec parameters, the negotiation packet may include the Maintenance-mode option. Based on the Maintenance-mode option of the second MACsec slave apparatus, the first MACsec slave apparatus may learn the maintenance mode of the second MACsec slave apparatus. Based on the Maintenance-mode option of the first MACsec slave apparatus, the second MACsec slave apparatus may learn the maintenance mode of the first MACsec slave apparatus.

For example, in response to determining the maintenance mode is enabled, the first MACsec slave apparatus (or the second MACsec slave apparatus) may forward data packets before the completion of MACsec negotiation. In response to determining the maintenance mode is not enabled, the first MACsec slave apparatus (or the second MACsec slave apparatus) is prohibited from forwarding data packets before the completion of MACsec negotiation, that is, the data packets are discarded.

For example, in response to determining establishing an MKA session between a first interface of the first MACsec slave apparatus and a second interface of the second MACsec slave apparatus, in response to determining the MACsec function is configured on both the first interface and the second interface, the first interface is temporarily in a block state, and the second interface is temporarily in a block state. In this way, data packets transmitted between the first interface and the second interface cannot be forwarded, resulting in packet loss of the data packets.

In response to the above finding, the maintenance mode may be enabled for the first interface and the maintenance mode may be enabled for the second interface. In this way, regardless of whether an MKA session has been established between the first interface and the second interface, the first interface is always in an unblock state, and the second interface is always in an unblock state. In this way, data packets transmitted between the first interface and the second interface may be forwarded, avoiding packet loss of the data packets.

Process 308: the MACsec master apparatus sends second MACsec parameters to the second MACsec slave apparatus, and the second MACsec slave apparatus receives the second MACsec parameters sent by the MACsec master apparatus.

The MACsec master apparatus may send a second parameter response packet to the second MACsec slave apparatus, and the second parameter response packet may include the interface identifier of the first interface of the first MACsec slave apparatus, the MAC address of the first interface, the interface identifier of the second interface of the second MACsec slave apparatus, the MAC address of the second interface, and the second MACsec parameters.

The second parameter response packet may include a BGP update packet, and the BGP update packet may include an NLRI field and a MACsec attribute field. The NLRI field may include an address family identifier and a variable-length NLRI field. The address family identifier indicates that the NLRI field carries MACsec information, and the variable-length NLRI field includes an interface identifier and a MAC address. The MACsec attribute field may include the second MACsec parameters.

In an example, the MACsec attribute field may include, but is not limited to, the following fields:
A connection association key name field, which is to carry the connection association key name. A pre-shared key field, which is to carry the pre-shared key, and the pre-shared key is to generate a session key. A session timeout time field, which is to carry the session timeout time, and the session timeout time is to control the lifespan of the session. A MACsec replay protection window size field, which is to carry the MACsec replay protection window size, and the MACsec replay protection window size is to discard replayed data packets. A MACsec encryption offset field, which is to carry the MACsec encryption offset, and the MACsec encryption offset is to indicate the starting encryption position.

The MACsec option field includes the following fields related to the second MACsec parameters: A MACsec encryption suite option, which is to indicate a list of encryption suites supported by the second MACsec slave apparatus. A secure channel identifier option, which is to indicate whether a secure channel identifier is carried. A shared key option, which is to indicate a key distribution method. A replay protection function option, which is to indicate whether replay protection is enabled or disabled. An integrity check mode option, which is to indicate whether an integrity check is performed, and in response to determining an integrity check is performed, whether data packets that fail the check are discarded. A Maintenance-mode option, which is to indicate whether the maintenance mode is enabled.

Process 309: the first MACsec slave apparatus and the second MACsec slave apparatus perform MACsec communication based on the first MACsec parameters and the second MACsec parameters. For example, the first MACsec slave apparatus and the second MACsec slave apparatus perform negotiation based on the first MACsec parameters and the second MACsec parameters. After the negotiation is successful, the first MACsec slave apparatus and the second MACsec slave apparatus perform MACsec communication.

In an example, after the first MACsec slave apparatus receives the first parameter response packet, it may also check whether the content of the NLRI field is consistent with the content of the NLRI field in the first parameter request packet. In response to determining the NLRI field and the NLRI field in the first parameter request packet are consistent, checking whether the MACsec Desir is enabled for the interface (such as the first interface) corresponding to the local interface identifier field. In response to determining the MACsec Desir is enabled, that is, MACsec protection for the first interface is expected, triggering negotiation with the second MACsec slave apparatus based on the first MACsec parameters and performs MACsec communication after the negotiation is successful.

In an example, after the second MACsec slave apparatus receives the second parameter response packet, it may also check whether the content of the NLRI field is consistent with the content of the NLRI field in the second parameter request packet. In response to determining the content of the NLRI field is consistent with the content of the NLRI field in the second parameter request packet, determine whether the MACsec Desir is enabled for the interface (such as the second interface) corresponding to the local interface identifier field. In response to determining the MACsec Desir is enabled, that is, MACsec protection for the second interface is expected, triggering negotiation with the first MACsec slave apparatus based on the second MACsec parameters and performs MACsec communication after the negotiation is successful.

In an example, in the implementation process of MACsec, a session negotiation process, a secure communication process, and a session termination process are involved. For the session negotiation process, the first MACsec slave apparatus and the second MACsec slave apparatus use the configured pre-shared key as the CAK and start negotiating a session through negotiation packets. The interface with a higher priority between the apparatuses will be elected as the Key Server, which is responsible for generating and distributing the SAK. The first MACsec slave apparatus and the second MACsec slave apparatus notify each other of their own capabilities and various parameters required for the session (such as the first MACsec parameters or the second MACsec parameters) through the MKA protocol.

For the secure communication process, after the session negotiation is completed, the first MACsec slave apparatus and the second MACsec slave apparatus have an available SAK and start encrypted communication by encrypting data packets with the SAK.

For the session termination process, after the first MACsec slave apparatus or the second MACsec slave apparatus receives an offline request packet from the other party, it clears the corresponding secure session. In response to determining the local end still does not receive an MKA protocol packet from the peer end after the session timeout timer expires, clearing the corresponding secure session.

As may be seen from the above technical solutions, in the examples of the present disclosure, the adjacency relationship of MACsec slave apparatuses is reported to the MACsec master apparatus, and the MACsec master apparatus obtains the MACsec parameters of the MACsec slave apparatuses, thereby centralizing the MACsec parameters to the MACsec master apparatus for processing. The MACsec master apparatus centrally manages the MACsec parameters and distributes the MACsec parameters to the MACsec slave apparatuses to complete the configuration of the MACsec parameters, simplifying the MACsec parameter configuration work and achieving automatic deployment of the MACsec parameters. This makes the deployment and operation and maintenance of MACsec relatively simple and solves the problem of complex MACsec deployment. Through LLDP and BGP, the configuration distribution for automatic deployment and capacity expansion is achieved, making MACsec deployment and network capacity expansion more convenient, enabling MACsec to be applicable to larger-scale networks, and allowing apparatuses that support MACsec to be smoothly upgraded.

Based on the same application concept as the above method, an example of the present disclosure proposes a parameter configuration apparatus, which is applied to a MACsec master apparatus. As shown in FIG. 6A, which is a schematic diagram of the structure of the apparatus, the apparatus includes:
A receiving module 611, to receive a first parameter request packet sent by a first MACsec slave apparatus, wherein the first parameter request packet comprises an interface identifier of a first interface of the first MACsec slave apparatus and a Media Access Control (MAC) address of the first interface, an interface identifier of a neighbor interface of a neighbor apparatus of the first MACsec slave apparatus and a MAC address of the neighbor interface of a neighbor apparatus of the first MACsec slave apparatus; receive a second parameter request packet sent by a second MACsec slave apparatus, wherein the second parameter request packet comprises an interface identifier of a second interface of the second MACsec slave apparatus and a MAC address of the second interface, an interface identifier of a neighbor interface of a neighbor apparatus of the second MACsec slave apparatus and a MAC address of the neighbor interface of the neighbor apparatus of the second MACsec slave apparatus;
An obtaining module 612, to, in response to determining that the first interface and the second interface are successfully paired based on the first parameter request packet and the second parameter request packet, obtain the first MACsec parameters corresponding to the first MACsec slave apparatus and the second MACsec parameters corresponding to the second MACsec slave apparatus;
A sending module 613, to send the first MACsec parameters to the first MACsec slave apparatus and send the second MACsec parameters to the second MACsec slave apparatus, and enable the first MACsec slave apparatus and the second MACsec slave apparatus to perform MACsec communication based on the first MACsec parameters and the second MACsec parameters.

In an example, the first parameter request packet includes first MACsec desire information, which indicates whether the first MACsec slave apparatus expects or does not expect MACsec protection for the first interface; the second parameter request packet includes second MACsec desire information, which indicates whether the second MACsec slave apparatus expects or does not expect MACsec protection for the second interface; in response to determining obtaining the first MACsec parameters corresponding to the first MACsec slave apparatus and the second MACsec parameters corresponding to the second MACsec slave apparatus, the obtaining module 612 is specifically to: in response to the first MACsec desire information indicating that the first MACsec slave apparatus expects MACsec protection for the first interface and the second MACsec desire information indicating that the second MACsec slave apparatus expects MACsec protection for the second interface, obtain the first MACsec parameters corresponding to the first MACsec slave apparatus and obtain the second MACsec parameters corresponding to the second MACsec slave apparatus.

In an example, among all MACsec parameters, there are first type parameters and second type parameters; in response to determining obtaining the first MACsec parameters corresponding to the first MACsec slave apparatus and the second MACsec parameters corresponding to the second MACsec slave apparatus, the obtaining module 612 is specifically to: for each first type parameter, obtain a reference parameter value of the first type parameter; the reference parameter value is selected from a parameter value set or is a default parameter value; for each second type parameter, obtain a first parameter value and a second parameter value of the second type parameter, where the first parameter value may be the same as or different from the second parameter value; the first parameter value is selected from a parameter value set or is a default parameter value; the second parameter value is selected from a parameter value set or is a default parameter value; obtain the first MACsec parameters, where the first MACsec parameters include the reference parameter value of each first type parameter and the first parameter value of each second type parameter; obtain the second MACsec parameters, where the second MACsec parameters include the reference parameter value of each first type parameter and the second parameter value of each second type parameter.

In an example, in response to determining sending the first MACsec parameters to the first MACsec slave apparatus and sending the second MACsec parameters to the second MACsec slave apparatus, the sending module 613 is specifically configured to:
Send a first parameter response packet to the first MACsec slave apparatus, where the first parameter response packet includes the interface identifier of the first interface of the first MACsec slave apparatus, the MAC address of the first interface, the interface identifier of the second interface of the second MACsec slave apparatus, the MAC address of the second interface, and the first MACsec parameters;
Send a second parameter response packet to the second MACsec slave apparatus, where the second parameter response packet includes the interface identifier of the second interface of the second MACsec slave apparatus, the MAC address of the second interface, the interface identifier of the first interface of the first MACsec slave apparatus, the MAC address of the first interface, and the second MACsec parameters.

In an example, the first parameter request packet and the second parameter request packet include a first BGP update packet, and the first BGP update packet includes a first NLRI field and a first MACsec attribute field; where the first NLRI field includes an address family identifier and a variable-length NLRI field, the address family identifier indicates that the first NLRI field carries MACsec information, and the variable-length NLRI field includes an interface identifier and a MAC address; where the first MACsec attribute field includes MACsec desire information.

In an example, the first parameter response packet and the second parameter response packet include a second BGP update packet, and the second BGP update packet includes a second NLRI field and a second MACsec attribute field; where the second NLRI field includes an address family identifier and a variable-length NLRI field, the address family identifier indicates that the second NLRI field carries MACsec information, and the variable-length NLRI field includes an interface identifier and a MAC address; where the second MACsec attribute field includes MACsec parameters.

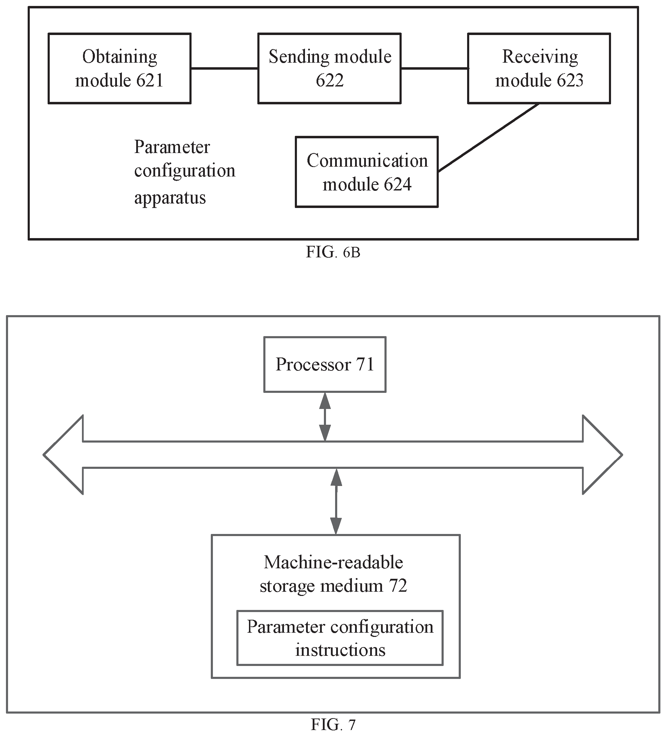

Based on the same application concept as the above-mentioned method, an example of the present disclosure proposes a parameter configuration apparatus applicable to any MACsec slave apparatus. Referring to Fig. 6B, which shows a structural diagram of the apparatus, the apparatus includes: an obtaining module 621 configured to obtain the interface identifier and MAC address of a neighbor interface of a neighbor apparatus of the local MACsec slave apparatus; wherein the neighbor apparatus is another MACsec slave apparatus; a sending module 622 configured to send a parameter request packet to a MACsec master apparatus, where the parameter request packet includes the interface identifier and MAC address of a local interface of the local MACsec slave apparatus, and the interface identifier and MAC address of the neighbor interface of the neighbor apparatus; wherein the local interface is connected to the neighbor interface; a receiving module 623 configured to receive MACsec parameters corresponding to the local MACsec slave apparatus sent by the MACsec master apparatus; wherein the MACsec parameters are obtained by the MACsec master apparatus in response to determining the pairing between the local interface and the neighbor interface is successful based on the parameter request packet; a communication module 624 to perform MACsec communication with the neighbor apparatus based on the MACsec parameters.

Based on the same application concept as the above-mentioned method, an example of the present disclosure proposes an electronic apparatus (such as a MACsec master apparatus, a first MACsec slave apparatus, or a second MACsec slave apparatus). Referring to Fig. 7, the electronic apparatus includes: a processor 71 and a machine-readable storage medium 72, where the machine-readable storage medium 72 stores machine-executable instructions that may be executed by the processor 71; the processor 71 is configured to execute the machine-executable instructions to implement the parameter configuration method disclosed in the above examples of the present disclosure.

Based on the same application concept as the above-mentioned method, an example of the present disclosure also provides a machine-readable storage medium. The machine-readable storage medium stores several computer instructions, and in response to determining these computer instructions are executed by a processor, they may implement the parameter configuration method disclosed in the above examples of the present disclosure.

The above-mentioned machine-readable storage medium may be any electronic, magnetic, optical, or other physical storage apparatus that may contain or store information, such as executable instructions, data, etc. For example, the machine-readable storage medium may be: RAM (Random Access Memory), volatile memory, non-volatile memory, flash memory, a storage drive (such as a hard drive), a solid-state drive, any type of storage disk (such as an optical disk, DVD, etc.), or a similar storage medium, or a combination thereof.

Based on the same application concept as the above-mentioned method, an example of the present disclosure also provides a computer program product, which may include a computer program. In response to determining the computer program is executed by a processor, it implements the parameter configuration method disclosed in the above examples of the present disclosure.

Those skilled in the art should understand that the examples of the present disclosure may be provided as methods, systems, or computer program products. Therefore, the present disclosure may take the form of a completely hardware example, a completely software example, or an example combining software and hardware aspects. Moreover, the examples of the present disclosure may take the form of a computer program product implemented on one or more computer-usable storage media (including but not limited to disk storage, CD-ROM, optical storage, etc.) containing computer-usable program code.

The above descriptions are merely examples of the present disclosure and are not intended to limit the present disclosure. For those skilled in the art, the present disclosure may be subject to various modifications and changes. Any modifications, equivalent substitutions, improvements, etc., made within the spirit and principle of the present disclosure should be included within the scope of the claims of the present disclosure.

## Claims

1. A parameter configuration method, applied to a MACsec master apparatus, comprising:
receiving a first parameter request packet sent by a first MACsec slave apparatus, wherein the first parameter request packet comprises an interface identifier of a first interface of the first MACsec slave apparatus and a MAC address of the first interface, an interface identifier of a neighbor interface of a neighbor apparatus of the first MACsec slave apparatus and a MAC address of the neighbor interface of the neighbor apparatus of the first MACsec slave apparatus;
receiving a second parameter request packet sent by a second MACsec slave apparatus, wherein the second parameter request packet comprises an interface identifier of a second interface of the second MACsec slave apparatus and a MAC address of the second interface, an interface identifier of a neighbor interface of a neighbor apparatus of the second MACsec slave apparatus and a MAC address of the neighbor interface of the neighbor apparatus of the second MACsec slave apparatus;
in response to determining that the first interface and the second interface are successfully paired based on the first parameter request packet and the second parameter request packet, obtaining a first MACsec parameter corresponding to the first MACsec slave apparatus and a second MACsec parameter corresponding to the second MACsec slave apparatus;
sending the first MACsec parameter to the first MACsec slave apparatus, sending the second MACsec parameter to the second MACsec slave apparatus, and enabling the first MACsec slave apparatus and the second MACsec slave apparatus to perform MACsec communication based on the first MACsec parameter and the second MACsec parameter.

2. The method of claim 1, wherein the first parameter request packet comprises first MACsec desire information, wherein the first MACsec desire information indicates whether the first MACsec slave apparatus expects MACsec protection for the first interface; the second parameter request packet comprises second MACsec desire information, wherein the second MACsec desire information indicates whether the second MACsec slave apparatus expects the MACsec protection for the second interface;
the obtaining the first MACsec parameter corresponding to the first MACsec slave apparatus and the second MACsec parameter corresponding to the second MACsec slave apparatus comprises: in response to the first MACsec desire information indicating that the first MACsec slave apparatus expects the MACsec protection for the first interface and the second MACsec desire information indicating that the second MACsec slave apparatus expects the MACsec protection for the second interface, obtaining the first MACsec parameter corresponding to the first MACsec slave apparatus and obtaining the second MACsec parameter corresponding to the second MACsec slave apparatus.

3. The method of claim 1 or 2, wherein among all MACsec parameters, there are first-type parameters and second-type parameters, and the obtaining the first MACsec parameter corresponding to the first MACsec slave apparatus and the second MACsec parameter corresponding to the second MACsec slave apparatus comprises:
for each first-type parameter, obtaining a reference parameter value of the first-type parameter; wherein the reference parameter value is selected from a parameter value set or is a default parameter value;
for each second-type parameter, obtaining a first parameter value and a second parameter value of the second-type parameter, wherein the first parameter value is same as or different from the second parameter value; wherein the first parameter value is selected from a parameter value set or is a default parameter value; the second parameter value is selected from a parameter value set or is a default parameter value;
obtaining the first MACsec parameter, wherein the first MACsec parameter comprises the reference parameter value of each first-type parameter and the first parameter value of each second-type parameter;
obtaining the second MACsec parameter, wherein the second MACsec parameter comprises the reference parameter value of each first-type parameter and the second parameter value of each second-type parameter.

4. The method of claim 1, wherein the sending the first MACsec parameter to the first MACsec slave apparatus, and sending the second MACsec parameter to the second MACsec slave apparatus comprises:
sending a first parameter response packet to the first MACsec slave apparatus, wherein the first parameter response packet comprises the interface identifier of the first interface of the first MACsec slave apparatus and the MAC address of the first interface, the interface identifier of the second interface of the second MACsec slave apparatus and the MAC address of the second interface, and the first MACsec parameter;
sending a second parameter response packet to the second MACsec slave apparatus, wherein the second parameter response packet comprises the interface identifier of the second interface of the second MACsec slave apparatus and the MAC address of the second interface, the interface identifier of the first interface of the first MACsec slave apparatus and the MAC address of the first interface, and the second MACsec parameter.

5. The method of claim 1 or 4, wherein,
the first parameter request packet and the second parameter request packet comprise a first BGP update packet, wherein the first BGP update packet comprises a first NLRI field and a first MACsec attribute field; wherein the first NLRI field comprises an address family identifier and a variable-length NLRI field, the address family identifier indicates that the first NLRI field carries MACsec information, and the variable-length NLRI field comprises an interface identifier and a MAC address; wherein the first MACsec attribute field comprises MACsec desire information;
the first parameter response packet and the second parameter response packet comprise a second BGP update packet, wherein the second BGP update packet comprises a second NLRI field and a second MACsec attribute field; wherein the second NLRI field comprises an address family identifier and a variable-length NLRI field, the address family identifier indicates that the second NLRI field carries MACsec information, and the variable-length NLRI field comprises an interface identifier and a MAC address; wherein the second MACsec attribute field comprises MACsec parameters.

6. A parameter configuration method, applied to any MACsec slave apparatus, comprising:
obtaining an interface identifier of a neighbor interface of a neighbor apparatus of the MACsec slave apparatus and a MAC address of the neighbor interface;
sending a parameter request packet to a MACsec master apparatus, wherein the parameter request packet comprises an interface identifier of a local interface of the MACsec slave apparatus and a MAC address of the local interface, the interface identifier of the neighbor interface of the neighbor apparatus and the MAC address of the neighbor interface; wherein the local interface is connected to the neighbor interface;
receiving a MACsec parameter corresponding to the MACsec slave apparatus sent by the MACsec master apparatus; wherein the MACsec parameter is obtained by the MACsec master apparatus in response to determining that the local interface and the neighbor interface are successfully paired based on the parameter request packet;
performing MACsec communication with the neighbor apparatus based on the MACsec parameter.

7. A parameter configuration apparatus, applied to a MACsec master apparatus, the parameter configuration apparatus comprising:
a receiving module, to receive a first parameter request packet sent by a first MACsec slave apparatus, wherein the first parameter request packet comprises an interface identifier of a first interface of the first MACsec slave apparatus and a MAC address of the first interface, an interface identifier of a neighbor interface of a neighbor apparatus of the first MACsec slave apparatus and a MAC address of the neighbor interface of a neighbor apparatus of the first MACsec slave apparatus; receive a second parameter request packet sent by a second MACsec slave apparatus, wherein the second parameter request packet comprises an interface identifier of a second interface of the second MACsec slave apparatus and a MAC address of the second interface, an interface identifier of a neighbor interface of a neighbor apparatus of the second MACsec slave apparatus and a MAC address of the neighbor interface of the neighbor apparatus of the second MACsec slave apparatus;
an obtaining module, to, in response to determining that the first interface and the second interface are successfully paired based on the first parameter request packet and the second parameter request packet that, obtain a first MACsec parameter corresponding to the first MACsec slave apparatus and a second MACsec parameter corresponding to the second MACsec slave apparatus;
a sending module, to send the first MACsec parameter to the first MACsec slave apparatus and send the second MACsec parameter to the second MACsec slave apparatus, and enable the first MACsec slave apparatus and the second MACsec slave apparatus to perform MACsec communication based on the first MACsec parameter and the second MACsec parameter.

8. The apparatus of claim 7, wherein the first parameter request packet comprises first MACsec desire information, wherein the first MACsec desire information indicates whether the first MACsec slave apparatus expects MACsec protection for the first interface; the second parameter request packet comprises second MACsec desire information, wherein the second MACsec desire information indicates whether the second MACsec slave apparatus expects the MACsec protection for the second interface;
in response to obtaining the first MACsec parameter corresponding to the first MACsec slave apparatus and the second MACsec parameter corresponding to the second MACsec slave apparatus, the obtaining module is to: in response to the first MACsec desire information indicating that the first MACsec slave apparatus expects the MACsec protection for the first interface and the second MACsec desire information indicating that the second MACsec slave apparatus expects the MACsec protection for the second interface, obtain the first MACsec parameter corresponding to the first MACsec slave apparatus and obtain the second MACsec parameter corresponding to the second MACsec slave apparatus.

9. The apparatus of claim 7 or 8, wherein among all MACsec parameters, there are first-type parameters and second-type parameters;
in response to obtaining the first MACsec parameter corresponding to the first MACsec slave apparatus and the second MACsec parameter corresponding to the second MACsec slave apparatus, the obtaining module to:
for each first-type parameter, obtain a reference parameter value of the first-type parameter; wherein the reference parameter value is selected from a parameter value set or is a default parameter value;
for each second-type parameter, obtain a first parameter value and a second parameter value of the second-type parameter, wherein the first parameter value is same as or different from the second parameter value; wherein the first parameter value is selected from a parameter value set or is a default parameter value; the second parameter value is selected from a parameter value set or is a default parameter value;
obtain the first MACsec parameter, wherein the first MACsec parameter comprises the reference parameter value of each first-type parameter and the first parameter value of each second-type parameter;
obtain the second MACsec parameter, wherein the second MACsec parameter comprises the reference parameter value of each first-type parameter and the second parameter value of each second-type parameter.

10. The apparatus of claim 7, wherein when sending the first MACsec parameter to the first MACsec slave apparatus and sending the second MACsec parameter to the second MACsec slave apparatus, the sending module to:
send a first parameter response packet to the first MACsec slave apparatus, wherein the first parameter response packet comprises the interface identifier of the first interface of the first MACsec slave apparatus and the MAC address of the first interface, the interface identifier of the second interface of the second MACsec slave apparatus and the MAC address of the second interface, and the first MACsec parameter;
send a second parameter response packet to the second MACsec slave apparatus, wherein the second parameter response packet comprises the interface identifier of the second interface of the second MACsec slave apparatus and the MAC address of the second interface, the interface identifier of the first interface of the first MACsec slave apparatus and the MAC address of the first interface, and the second MACsec parameter.

11. The apparatus of claim 7 or 10, wherein the first parameter request packet and the second parameter request packet comprise a first BGP update packet, wherein the first BGP update packet comprises a first NLRI field and a first MACsec attribute field; wherein the first NLRI field comprises an address family identifier and a variable-length NLRI field, the address family identifier indicates that the first NLRI field carries MACsec information, and the variable-length NLRI field comprises an interface identifier and a MAC address; wherein the first MACsec attribute field comprises MACsec desire information;
the first parameter response packet and the second parameter response packet comprise a second BGP update packet, wherein the second BGP update packet comprises a second NLRI field and a second MACsec attribute field; wherein the second NLRI field comprises an address family identifier and a variable-length NLRI field, the address family identifier indicates that the second NLRI field carries MACsec information, and the variable-length NLRI field comprises an interface identifier and a MAC address; wherein the second MACsec attribute field comprises MACsec parameters.

12. A parameter configuration apparatus, applied to any MACsec slave apparatus, the parameter configuration apparatus comprising:
an obtaining module, to obtain an interface identifier of a neighbor interface of a neighbor apparatus of the MACsec slave apparatus and a MAC address of the neighbor interface; wherein the neighbor apparatus is another MACsec slave apparatus;
a sending module, to send a parameter request packet to a MACsec master apparatus, wherein the parameter request packet comprises an interface identifier of a local interface of the MACsec slave apparatus and a MAC address of the local interface, the interface identifier of the neighbor interface of the neighbor apparatus and the MAC address of the neighbor interface; wherein the local interface is connected to the neighbor interface;
a receiving module, configured to receive a MACsec parameter corresponding to the MACsec slave apparatus sent by the MACsec master apparatus; wherein the MACsec parameter is obtained by the MACsec master apparatus in response to determining that the local interface and the neighbor interface are successfully paired based on the parameter request packet;
a communication module, to perform MACsec communication with the neighbor apparatus based on the MACsec parameter.

13. An electronic apparatus, wherein the apparatus comprises: a processor and a machine-readable storage medium, wherein the machine-readable storage medium stores machine-executable instructions that can be executed by the processor; the processor is to execute the machine-executable instructions to implement the method of any one of claims 1 to 6.
